# EUROPÄISCHE PATENTSCHRIFT

(11) **EP 2 499 016 B1**
(45) Veröffentlichungstag und Bekanntmachung des Hinweises auf die Patenterteilung: **22.05.2019**
(21) Anmeldenummer: 10779249.1
(22) Anmeldetag: 09.11.2010
(51) Int. Cl.: B60L 11/18, B62H 5/00, B62H 5/14, H02J 7/00, B62M 6/80

(54) **ANORDNUNG ZUM ANSCHLIESSEN EINES FAHRZEUGS**
ARRANGEMENT FOR CONNECTING A VEHICLE
ENSEMBLE PERMETTANT D'ATTACHER UN VÉHICULE

(30) Priorität: 13.11.2009 DE 102009052870
(43) Veröffentlichungstag der Anmeldung: 19.09.2012
(73) Patentinhaber: SEW-EURODRIVE GmbH & Co. KG, 76646 Bruchsal (DE)
(72) Erfinder: SCHNEIDER, Bernhard, 68794 Oberhausen-Rheinhausen (DE); MAHLEIN, Jochen, 76139 Karlsruhe (DE); EGGER, Björn, 76646 Bruchsal (DE)
(86) Internationale Anmeldenummer: PCT/EP2010/006805
(87) Internationale Veröffentlichungsnummer: WO 2011/057755

(56) Entgegenhaltungen:
- EP-A2- 0 741 441
- CN-Y- 201 052 799
- GB-A- 2 154 316
- JP-A- 5 316 606
- JP-A- 2006 109 574
- US-A- 5 816 643
- US-A1- 2008 297 108

## Beschreibung

Die Erfindung betrifft eine Anordnung zum Anschließen eines Fahrzeugs.

Fahrzeuge mit einer Verschließeinheit sind bekannt. Insbesondere ist bei Zweirädern bekannt, ein Verschlussmittel durch den Speichenbereich eines Rades hindurchzuführen, um eine Wegfahrsperre zu realisieren.

Aus der EP 0 741 441 A2 ist ein induktives Beladesystem für eine Batterie eines Zweirades bekannt, das an der Lenkstange eingreift.

Aus der JP 2006 109574 A ist ein Beladen einer Batterie eines Zweirades bekannt, wobei ein Ladekabel zu einem an der Lenkstange befestigten Box geführt ist.

Aus der US 2008/297108 A1 ist ein Speicher für Fahrräder bekannt, die im Speicher beladen werden.

Aus der JP 5 316606 A ist ebenfalls ein Beladesystem bekannt.

Aus der US 5 816 643 A ist eine Beladekupplung für ein elektrisch betreibbares Fahrzeug bekannt.

Aus der GB 2 154 316 A ist als nächstliegender Stand der Technik ein flexibles Verschlussglied bekannt.

Der Erfindung liegt daher die Aufgabe zugrunde, eine Anordnung zum Anschließen eines Fahrzeugs weiterzubilden, wobei eine besonders einfache und sichere Bedienung ermöglicht werden soll.

Erfindungsgemäß wird die Aufgabe bei der Anordnung zum Anschließen eines Fahrzeugs nach den in Anspruch 1 angegebenen Merkmalen gelöst.

Wichtige Merkmale der Erfindung bei der Anordnung zum Anschließen eines Fahrzeugs sind, dass die Anordnung zum Anschließen eines Fahrzeugs an ein stationär angeordnetes Mittel vorgesehen ist,
wobei eine Verschließeinheit am Fahrzeug angeordnet ist, die formschlüssig verbindbar mit einem Verschlussteil ist, das mit dem stationär angeordneten Mittel verbunden ist über eine flexible Leitung, wobei das Verschlussteil Mittel zur Energieübertragung, insbesondere Übertragung elektrischer Energie, umfasst.

Von Vorteil ist dabei, dass somit einerseits das einfache und sichere Bedienen beim Anschließen erreicht ist und außerdem ein Beladen des Fahrzeugs ermöglicht ist. Zusätzlich eröffnet die elektrische Verbindung auch eine Versorgung von elektrischen Verbrauchern, wie elektrische Heizvorrichtungen zum Beheizen des Energiespeichers und/oder der Verschließeinheit.

Bei einer vorteilhaften Ausgestaltung umfasst die flexible Leitung zumindest eine elektrische Leitung. Von Vorteil ist dabei, dass eine integrierte Leitung ausführbar ist, die somit mindestens zwei Funktionen, also die mechanische Verbindung und elektrische Versorgung, ausführbar macht, ohne dass weitere Mittel notwendig wären.

Bei einer vorteilhaften Ausgestaltung sind als Mittel zur Energieübertragung elektrische Kontakte verwendet, insbesondere wobei hierzu das Verschlussteil an seiner Außenfläche elektrische Kontaktflächen aufweist, die von im Fahrzeug angeordneten Kontaktierungsmitteln des Fahrzeuges kontaktierbar sind. Von Vorteil ist dabei, dass ein möglichst hoher Wirkungsgrad bei der Übertragung erreichbar ist. Denn die Verluste sind im Wesentlichen auf die ohmschen Verluste beschränkt, wenn der Kontaktwiderstand vernachlässigbar ist. Außerdem ist eine Übertragung von Gleichstrom ans Fahrzeug ermöglicht, wodurch ein direktes Beladen und auch ein direktes Steuern des Ladestromes ermöglicht ist.

Bei einer vorteilhaften Ausgestaltung ist der Ladestrom für den Energiespeicher über erste Kontaktierungsmittel führbar, insbesondere über zwei. Von Vorteil ist dabei, dass zwei Leitungen für die Ladestromversorgung ausreichen.

Bei einer vorteilhaften Ausgestaltung sind weitere Kontaktierungsmittel zur Durchleitung von leitungsgebundenen Signalen zur Datenübertragung vorgesehen. Von Vorteil ist dabei, dass weitere Leitungen zur Datenübertragung vorsehbar sind. Somit ist beispielsweise der Wert einer physikalischen Größe, wie beispielsweise Ladezustand oder Temperatur, übermittelbar.

Bei einer vorteilhaften Ausgestaltung ist als Mittel zur Energieübertragung eine im Fahrzeug angeordnete Sekundärwicklung vorgesehen, die induktiv koppelbar ist an eine Primärwicklung, welche vom Verschlussteil umfasst ist und über die flexible Leitung versorgt ist. Von Vorteil ist dabei, dass eine berührungslose Übertragung ermöglicht ist, die auch bei Verschmutzung oder Vereisung im Wesentlichen ungestört arbeitet. Auch im Nassen ist die Beladung ohne wesentliche Beeinträchtigung des Wirkungsgrades ausführbar. Außerdem ist keine weitere galvanische Trennung zwischen Fahrzeug und Ladestation notwendig.

Bei einer vorteilhaften Ausgestaltung prägt ein Einspeisegerät einen Wechselstrom in die Primärwicklung ein, wobei der Sekundärwicklung eine Kapazität derart in Reihe und/oder parallel zugeschaltet ist, dass die zugehörige Resonanzfrequenz im Wesentlichen der Frequenz des eingeprägten Wechselstromes entspricht. Von Vorteil ist dabei, dass eine Stromquelle verwendbar ist, die mit einer Frequenz zwischen 10 und 500 kHz arbeitet, vorzugsweise mit einer Frequenz zwischen 10 und 30 kHz. Durch die resonante Übertagung ist der Wirkungsgrad unempfindlich gegen Abweichungen von der optimalen Kopplungsstärke zwischen Primärwicklung und Sekundärwicklung.

Erfindungsgemäß ist das Verschlussteil als Wegfahrsperre und/oder Drehsperre für ein Rad verwendet, wobei das Verschlussteil den Speichenbereich eines Rades des Fahrzeugs durchdringt. Von Vorteil ist dabei, dass das Verschlussteil nicht nur dir Funktion der Wegfahrsperre sondern auch die Funktion der Drehsperre aufweist.

Bei einer vorteilhaften Ausgestaltung ist die Verschließeinheit des Fahrzeugs auf einer ersten Seite eines Rades des Fahrzeugs angeordnet und das Verschlussteil durchdringt im mit der Verschließeinheit verbundenen Zustand zumindest teilweise eine Ausnehmung einer weiteren Einheit, wobei zwischen dieser weiteren Einheit und der Verschließeinheit das Rad vorgesehen ist. Von Vorteil ist dabei, dass das Verschlussteil in zwei Punkten gelagert ist, zwischen denen der Speichenbereich des Rades angeordnet ist. Somit ist eine Drehbewegung des Rades stabilisiert verhinderbar, also sind zur Verhinderung der Drehbewegung große Kräfte, insbesondere Reaktionskräfte, entgegenbringbar.

Bei einer vorteilhaften Ausgestaltung weist die flexible Leitung ein Stahldrahtgeflecht oder gehärtete Stahlhülsen auf. Von Vorteil ist dabei, dass das Ladekabel schnittsicher ist.

Bei einer vorteilhaften Ausgestaltung sind innerhalb des Stahldrahtgeflechts zumindest zwei voneinander beabstandete elektrische Leitungen vorgesehen. Von Vorteil ist dabei, dass innerhalb des Schnittschutzes die elektrischen Leitungen geführt sind. Bei koaxialer Ausführung der Leitungen sind auch Wechselströme ohne besondere Verluste durchleitbar.

Bei einer vorteilhaften Ausgestaltung hat die flexible Leitung einen rotationssymmetrischen und/oder koaxialen Aufbau. Von Vorteil ist dabei, dass Hochfrequenzen ohne besondere Verluste durchleitbar sind.

Bei einer vorteilhaften Ausgestaltung weist die flexible Leitung ein Zugseil zur Entlastung auf. Von Vorteil ist dabei, dass eine mechanische Entlastung realisiert ist.

Bei einer vorteilhaften Ausgestaltung sind Verschließeinheit und/oder Energiespeicher elektrisch beheizbar ausgeführt, insbesondere wobei hierzu eine Steuerelektronik am Fahrzeug vorgesehen ist. Von Vorteil ist dabei, dass auch bei Vereisung ein Betrieb wiederherstellbar ist und/oder bei tiefen Temperaturen eine Beheizung des Energiespeichers ermöglicht ist, um seine Funktionsfähigkeit wiederherzustellen.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist ein erfindungsgemäßes Ladekabel 9 angeschnitten gezeigt.
In der Figur 2 ist eine Ladestation mit zu beladendem Fahrzeug gezeigt.

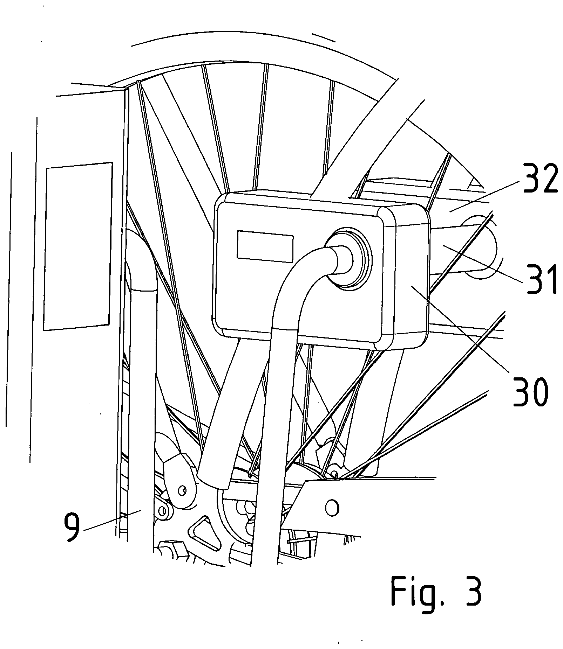

In der Figur 3 ist ein Ausschnitt hierzu vergrößert dargestellt.
In der Figur 4 ist ein Schnitt durch den Energie-übertragenden Bereich gezeigt.

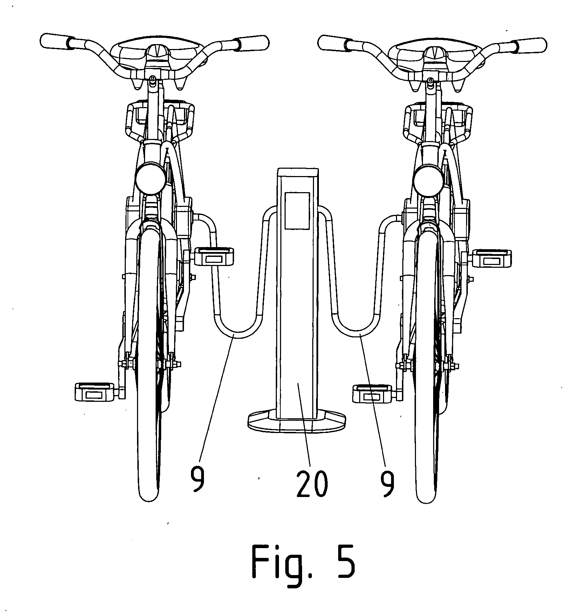

In der Figur 5 ist eine Ladestation mit zwei Fahrzeugen gezeigt.
In der Figur 6 ist ein weiteres Fahrzeug angeschlossen mittels einer am Fahrzeug verbundenen Verschließeinheit mit Verschlussmittel an eine Stange, umfassend elektrische Leitungen.
In der Figur 7 ist die Verschließeinheit mit Verschlussteil näher dargestellt in Schrägansicht.
In der Figur 8 ist eine zugehörige Schnittansicht dargestellt.

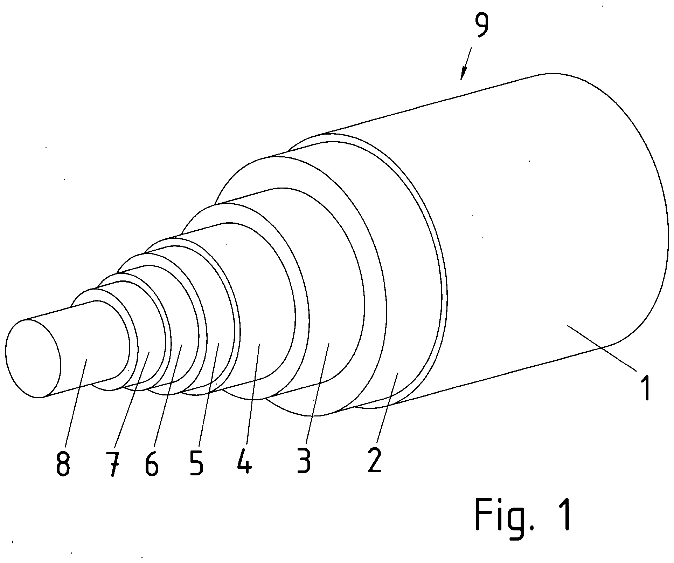

Gemäß Figur 1 weist das Ladekabel 9 verschiedene konzentrische Abschnitte auf. Dabei ist am äußeren Umfang eine elektrische Isolierung 1, insbesondere Gummierung, vorgesehen, die als Berührschutz dient. Radial innerhalb dieser Isolierung 1 ist ein Stahlseilgeflecht 2 vorgesehen, das einen Schutz gegen Verletzungen des Ladekabels 9 durch Einwirkungen von Werkzeugen, wie Messer, Sägen und dergleichen, bietet. Alternativ sind auch bewegliche Hülsen vorsehbar, die einen besonders hohen Schutz gegen Sägen bieten, da sie von der Säge mitdrehbare Hülsen aufweisen.

Radial innerhalb dieser mechanischen Schutzschicht setzt sich die koaxiale Anordnung des Ladekabels mit einem Abschnitt zur elektrischen Isolierung 3 fort, wobei hier wiederum ein elektrisch isolierender Kunststoff verwendet ist.

Radial innerhalb dieser Isolierung 3 ist eine Leitungsader 4 vorgesehen, die vorzugsweise aus Kupfer ausgeführt ist. Hierbei ist aber auch ein Kupferlitzen-Geflecht, insbesondere aus HF-Litze, bei der die einzelnen Litzendrähte jeweils eine elektrische Isolierung aufweisen, verwendbar.

Radial darunter schließt sich wiederum eine Isolierung 5 an, die als Abschnitt zur elektrischen Isolierung ausgeführt ist.

Radial innerhalb dieser Isolierung ist wiederum eine Leitungsader 6 angeordnet, die entsprechend der Leitungsader 4 aufgebaut ist und nach radial innen von einer Isolierung 7 umgeben ist. Als zentraler Abschnitt ist ein Zugseil 8 vorgesehen, so dass eine mechanische Entlastung ausgeführt ist.

Somit ist das in Figur 1 dargestellte Ladekabel 9 schnittsicher ausgeführt und gegen mechanische Einwirkungen gesichert.

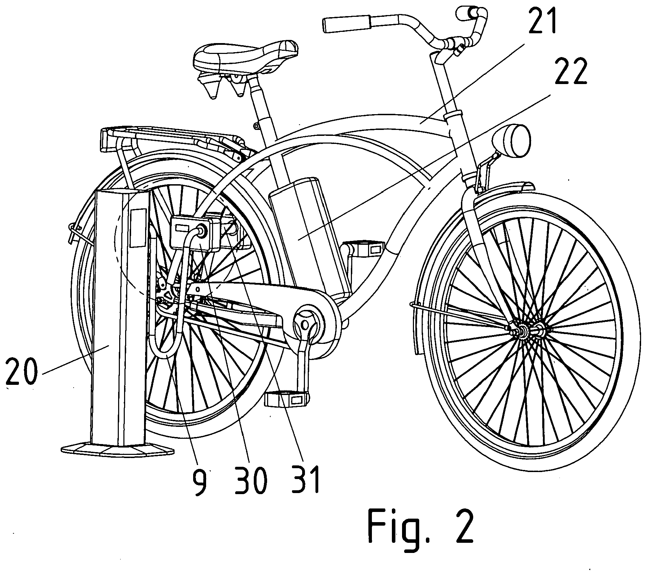

In Figur 2 ist die Ladestation gezeigt, wobei der Energiespeicher 22 eines Fahrzeuges 21 aus einer Einspeisevorrichtung 20 der Ladestation beladen wird. Vorzugsweise ist das Fahrzeug 21 als Zweirad-Fahrzeug und der Energiespeicher 22 als Batterie oder Akkumulator ausgeführt.

Am Fahrzeug 21, insbesondere an einem außen am Fahrzeug angebrachten Teil oder am Gehäuse des Fahrzeuges ist eine Übertragereinheit 30 angeordnet, wobei durch eine Ausnehmung in der Übertragereinheit 30 ein Bolzen 31 hindurchsteckbar ist, welcher an einem Endbereich des Ladekabels 9 angeordnet ist.

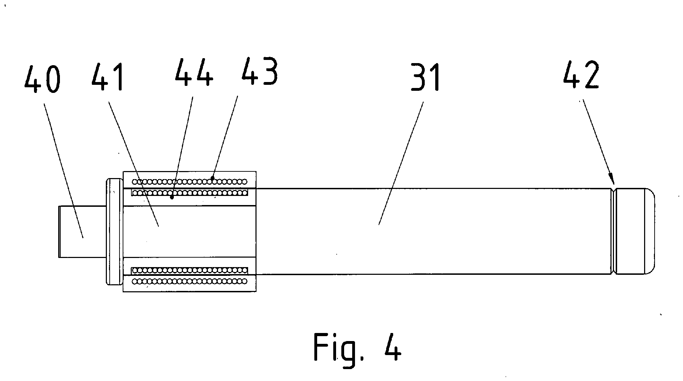

Wie in Figur 4 dargestellt ist, weist der Bolzen 31 an seinem vom Ladekabel 9 abgewandten Endbereich eine Kerbe 42 auf, mit welcher er in einer Verschlusseinheit 32 formschlüssig und/oder kraftschlüssig verbindbar ist mittels Betätigen einer von der Verschlusseinheit 32 umfassten Verschließeinheit. Vorzugsweise ist die Verschließeinheit oder Verschlusseinheit 32 in einem Vorgespannten Zustand, so dass bei Einstecken des Bolzens 31 ein Einschnappen eines Abschnitts in die Kerbe 42 ausgeführt wird. Alternativ rastet ein Abschnitt der Verschließeinheit in die Kerbe 42 beim Einstecken des Bolzens 31 in die Verschlusseinheit 32 ein.

Im Fahrzeug ist eine Sekundärwicklung vorgesehen, die in einem axialen Teilbereich des Bolzens 31 den Bolzen 31 zumindest teilweise umgibt. Vorzugsweise ist die Wicklung als Ringwicklung ausgeführt.

In diesem axialen Teilbereich ist vorzugsweise ein Ferritkernabschnitt angeordnet, um den die Primärwicklung 44 herum angeordnet und gewickelt ist. Hierzu ist der Bolzen 31 in dem axialen Bereich, also dem Spulenaufnahmebereich 41 verjüngt ausgeführt. Der Bolzen 31 ist samt auf dem Ferritkernabschnitt ausgeführter Primärwicklung von einer Kunststoffschicht zur elektrischen Isolierung umgeben.

Vorzugsweise ist der Bolzen durch den Speichenbereich oder eine sonstige Ausnehmung eines Rades des Fahrzeuges hindurchgesteckt und somit eine Wegfahrsperre oder Wegfahrsicherung realisiert.

Dabei ist die Übertragereinheit 30 auf einer Seite des Rades und die
Verschlusseinheit 32 auf der anderen Seite des Rades angeordnet.

Die Ladestation 20 umfasst einen Wechselrichter, der als mittelfrequente Spannungsquelle arbeitet und eine Gyratoranordnung speist, deren Induktivität und Kapazität derart angeordnet sind, dass die zugehörige Resonanzfrequenz im Wesentlichen der Mittelfrequenz entspricht. Auf diese Weise ist ein stromquellenartiges Verhalten an der Ausgangsseite der Gyratoranordnung erreichbar. Der somit erzeugte Strom wird im Hinleiter des Ladekabels 9, also Leitungsader 6 an die Primärwicklung 44 geführt und der aus der Primärwicklung 44 austretende Strom wird über den Rückleiter, also die Leitungsader 4, zurückgeführt an die Gyratoranordnung.

Ein Anpasstransformator ist anordenbar zwischen der Gyratoranordnung und der Primärwicklung 44.

Der auf dem Fahrzeug angeordneten Sekundärwicklung 43 ist eine Kapazität derart in Reihe oder parallel zugeschaltet, dass die zugehörige Resonanzfrequenz im Wesentlichen der Mittelfrequenz entspricht.

Zusätzlich zur berührungslosen Energieübertagung ist auch eine berührungslose Datenübertragung ausgeführt, so dass Daten zum Lademanagement des Energiespeichers und zur finanziellen Abrechnung übertragbar sind. Hierzu werden Zustandsdaten und Parameter des Energiespeichers, insbesondere auch bezogen auf Art des Energiespeichers Ladestrom, Ladespannung und/oder Ladezustand, an die Einspeisevorrichtung 20 übertragen. Diese steuert des in die Primärwicklung eingeprägten Strom abhängig von diesen Daten. Zusätzlich ist auch eine Identifikationsnummer des Fahrzeugs an die Ladestation 20 übertragbar, wodurch die Kosten für die Energie abrechenbar, beispielsweise abbuchbar sind von einem Bankkonto des Inhabers des Fahrzeugs. Alternativ weist die Ladestation 20 ein Lesegerät für eine Kreditkarte oder Prepaidkarte auf, wodurch das Kartenkonto der Kreditkarte mit einem Betrag belastbar ist, der der zum Aufladen bezogenen Energiemenge entspricht.

Durch den Formschluss des Bolzens 31 wird einerseits eine Verbindung zwischen der Verschlusseinheit 32 und dem Ladekabel erzeugt. Vorzugsweise ist der Bolzen 31 hierbei ebenfalls zumindest teilweise in eine Ausnehmung in der Verschlusseinheit 32 in Richtung der Achse des Bolzens 31 eingeführt. Somit ist in radialer Richtung eine formschlüssige Verbindung auch schon hierdurch erreicht. In axialer Richtung wird der Bolzen - wie oben beschrieben - mittels des einrastenden oder einschnappenden Abschnittes gesichert und somit formschlüssig verbunden. Andererseits wird durch das Hindurchschieben durch die Ausnehmung in der Übertragereinheit 30 auch hier eine in radialer Richtung zur Bolzenachse gesehen formschlüssige Verbindung erreicht. Somit ist der Bolzen formschlüssig in zwei voneinander beabstandeten Einheiten verbunden und insbesondere gegen Radialkräfte sehr stabil gesichert. Da zwischen den Einheiten der Speichenbereich des Rades angeordnet ist, ist also eine von Speichen in radialer Richtung auf den Bolzen 31 aufgebrachte Radialkraft einfach abfangbar, wodurch eine wirkungsvolle Wegfahrsperre bewirkt ist. Ein Wegschieben oder Wegtragen des Fahrzeuges ist mittels der formschlüssigen Verbindung des Abschnittes in der Kerbe des Bolzens oder entsprechender Verschließtechniken verhindert.

Besonders vorteilhaft ist die Festlegung des Bolzens in axialer Richtung mittels des Einschnappens oder Einrastens des Abschnitts. Hierdurch wird auch die Primärwicklung zur Sekundärwicklung in einer möglichst optimalen axialen Position gehalten, wodurch ein hoher Wirkungsgrad bei der Energieübertragung erreichbar ist und somit ein schnelles Laden ausführbar ist.

Bei einer zur berührungslosen Energiezufuhr alternativen Ausführung werden der Hinleiter und Rückleiter des Ladekabels an die Außenfläche des Bolzens geführt im dem Spulenaufnahmebereich entsprechenden Bereich. Somit sind fahrzeugseitig Federkontakte vorsehbar, wodurch ein elektrischer Kontakt bewirkbar ist und der Ladestrom direkt durchleitbar ist. Auf diese Weise ist sozusagen beim Verschließen auch elektrische Kontaktierungen mitbewirkbar. Auf diese Weise ist in der Ladestation nur ein einfaches kostengünstiges Ladegerät vorzusehen, das den Ladestrom oder die Ladespannung für den Energiespeicher steuert. Ein oder mehrere zusätzliche Kontakte sind anordenbar für Steuerleitungen zur Datenübertragung, wobei die Steuerleitungen ins Ladekabel integriert vorgesehen werden.

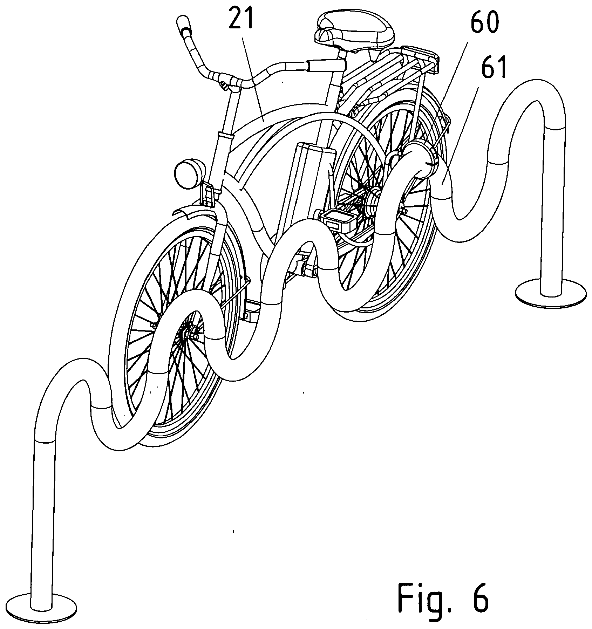

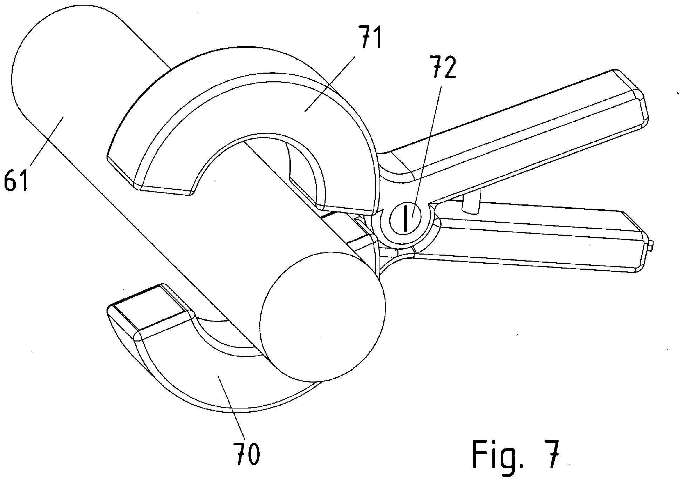

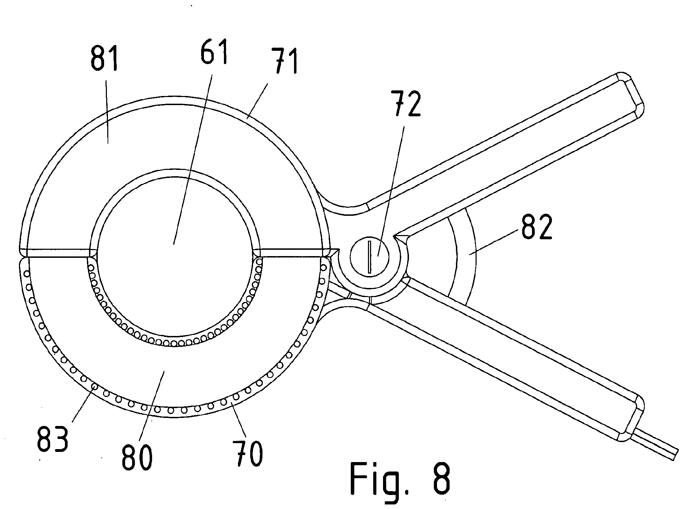

In den Figuren 6 bis 8 ist eine alternative Ausführung gezeigt.

Hierbei weist das Fahrzeug 21 eine Verschließeinheit 60 mit Verschlussmittel auf, die an eine Stange 61 als stationär angeordnetes Mittel formschlüssig verbunden wird. Hierzu ist das Verschlussmittel 70 wiederum mit einer Primärwicklung 83 ausgeführt, die um einen Ferritkern 80 gewickelt ist. Dieser Ferritkern 83 gleicht einer Ananasscheibenhälfte, ist also halbtorusförmig ausgeführt.

Das Verschlussmittel 70 ist über eine Drehgelenk 72 an einer Verschließeinheit 71 angebracht, die eine obere Wange umfasst, in welcher ebenfalls ein halbtorusförmiger Ferritkern 81 angeordnet ist, so dass die beiden Ferritkerne (80, 81) sich zu einem geschlossenen Ferritkern ergänzen, wenn das Verschlussmittel mit der Verschließeinheit geschlossen ist. In diesem Zustand umfasst dann der geschlossene Ferritkern die Stange 61, welche die Primärleitung aufweist.

Durch Überwinden der Federkraft des Federelements 82 lässt sich die Verschließeinheit öffnen, also das Verschlussmittel 70 teilweise abheben von der Verschließeinheit 71, insbesondere durch Drehbewegung am Drehgelenk 72. Auf diese Weise ist der Formschluss aufhebbar und die Verschließeinheit von der Stange 61 entfernbar.

Vorzugsweise ist am Drehgelenk 72 ein Schloss vorgesehen, so dass ein Öffnen der Verbindung zwischen Verschließeinheit 71 und Verschlussmittel 70 nur ausführbar ist nach Öffnen des Schlosses. Auf diese Weise ist die Sicherheit erhöht.

### Bezugszeichenliste

1 Isolierung, insbesondere Gummierung
2 Stahlseilgeflecht
3 Isolierung
4 Leitungsader
5 Isolierung
6 Leitungsader
7 Isolierung
8 Zugseil zur Entlastung
9 Ladekabel
20 Einspeisevorrichtung
21 Fahrzeug, insbesondere Zweirad-Fahrzeug
22 Energiespeicher, insbesondere Batterie oder Akkumulator
30 Übertragereinheit
31 Bolzen
32 Verschlusseinheit
41 Spulenaufnahmebereich
42 Kerbe
43 Sekundärwicklung
44 Primärwicklung
60 Verschließeinheit mit Verschlussmittel
61 Stange als stationär angeordnetes Mittel
70 Verschlussmittel
71 Verschließeinheit
72 Drehgelenk
80 Ferritkern
81 Ferritkern
82 Federelement
83 Primärwicklung

## Patentansprüche

1. Anordnung zum Anschließen eines Fahrzeugs (21) an ein stationär angeordnetes Mittel (20),
wobei eine Verschließeinheit (30) am Fahrzeug (21) angeordnet ist, die formschlüssig verbindbar mit
einem Verschlussteil (31) ist, das mit dem stationär angeordneten Mittel (20) **über eine flexible Leitung** (9) verbunden ist,
**wobei** das Verschlussteil (31) Mittel (43, 44) zur Energieübertragung, insbesondere Übertragung elektrischer Energie, umfasst,
**dadurch gekennzeichnet, dass**
das Verschlussteil (31) als Wegfahrsperre und/oder Drehsperre für ein Rad verwendet ist,
wobei das Verschlussteil (31) **den Speichenbereich eines Rades des Fahrzeugs** (21) **durchdringt.**

2. **Anordnung nach Anspruch 1,**
**dadurch gekennzeichnet, dass**
die flexible Leitung zumindest eine elektrische Leitung umfasst.

3. Anordnung nach Anspruch 2,
**dadurch gekennzeichnet, dass**
als Mittel zur Energieübertragung elektrische Kontakte verwendet sind, insbesondere wobei hierzu das Verschlussteil an seiner Außenfläche elektrische Kontaktflächen aufweist, die von im Fahrzeug angeordneten Kontaktierungsmitteln des Fahrzeuges kontaktierbar sind, insbesondere wobei der Ladestrom für einen Energiespeicher über erste Kontaktierungsmittel führbar ist, insbesondere über zwei, insbesondere wobei weitere Kontaktierungsmittel zur Durchleitung von leitungsgebundenen Signalen zur Datenübertragung vorgesehen sind.

4. Anordnung nach Anspruch 2,
**dadurch gekennzeichnet, dass**
**als Mittel zur Energieübertragung eine im Fahrzeug angeordnete Sekundärwicklung vorgesehen ist, die induktiv koppelbar ist an eine Primärwicklung, welche vom Verschlussteil umfasst ist und über die flexible Leitung versorgt ist.**

5. Anordnung nach Anspruch 4,
**dadurch gekennzeichnet, dass**
ein Einspeisegerät einen Wechselstrom in die Primärwicklung einprägt, wobei der Sekundärwicklung eine Kapazität derart in Reihe und/oder parallel zugeschaltet ist, dass die zugehörige Resonanzfrequenz im Wesentlichen der Frequenz des eingeprägten Wechselstromes entspricht.

6. Anordnung nach mindestens einem der vorangegangenen Ansprüche,
**dadurch gekennzeichnet, dass**
die Verschließeinheit des Fahrzeugs auf einer ersten Seite eines Rades des Fahrzeugs angeordnet ist und das Verschlussteil im mit der Verschließeinheit verbundenen Zustand zumindest teilweise eine Ausnehmung einer weiteren Einheit durchdringt, wobei zwischen dieser weiteren Einheit und der Verschließeinheit das Rad vorgesehen ist.

7. Anordnung nach mindestens einem der vorangegangenen Ansprüche,
**dadurch gekennzeichnet, dass**
die flexible Leitung ein Stahldrahtgeflecht oder gehärtete Stahlhülsen aufweist.

8. Anordnung nach Anspruch 7,
**dadurch gekennzeichnet, dass**
**innerhalb des Stahldrahtgeflechts zumindest zwei voneinander beabstandete elektrische Leitungen vorgesehen sind.**

9. Anordnung nach mindestens einem der vorangegangenen Ansprüche,
**dadurch gekennzeichnet, dass**
**die flexible Leitung einen rotationssymmetrischen und/oder koaxialen Aufbau hat.**

10. Anordnung nach mindestens einem der vorangegangenen Ansprüche,
**dadurch gekennzeichnet, dass**
die flexible Leitung ein Zugseil zur Entlastung aufweist.

11. Anordnung nach mindestens einem der vorangegangenen Ansprüche, **dadurch gekennzeichnet, dass** die Verschließeinheit und/oder ein Energiespeicher elektrisch beheizbar ausgeführt ist/sind insbesondere wobei hierzu eine Steuerelektronik am Fahrzeug vorgesehen ist.

12. Anordnung nach Anspruch 4
**dadurch gekennzeichnet, dass** das Verschlussteil und die Verschließeinheit am Fahrzeug angeordnet sind, wobei das Verschlussteil die Sekundärwicklung umfasst.

13. Anordnung nach mindestens einem der vorangegangenen Ansprüche,
**dadurch gekennzeichnet, dass**
das Verschlussteil mittels eines Drehgelenks an der Verschließeinheit angeordnet ist, insbesondere wobei das Drehgelenk ein Schloss zum Verschließen oder Öffnen aufweist.

14. Anordnung nach mindestens einem der vorangegangenen Ansprüche,
**dadurch gekennzeichnet, dass**
das stationär angeordnete Mittel eine Stange ist, welche elektrische Leitungen umfasst.

## Claims

1. An arrangement for attaching a vehicle (21) to a stationarily arranged means (20),
wherein a locking unit (30) is arranged on the vehicle (21), which unit can be connected in positive manner to a locking part (31) which is connected to the stationarily arranged means (20) by means of a flexible line (9),
wherein the locking part (31) comprises means (43, 44) for energy transmission, in particular transmission of electrical energy,
**characterised in that**
the locking part (31) is used as an immobilising means and/or turning lock for a wheel,
wherein the locking part (31) penetrates through the spoke region of a wheel of the vehicle (21).

2. An arrangement according to Claim 1,
**characterised in that**
the flexible line comprises at least one electrical line.

3. An arrangement according to Claim 2,
**characterised in that**
electrical contacts are used as means for energy transmission, in particular with the locking part for this purpose having on its outer surface electrical contact faces which can be contacted by contacting means of the vehicle which are arranged in the vehicle,
in particular with the charging current for an energy store being able to be conducted by means of first contacting means, in particular by means of two,
in particular with further contacting means being provided for conducting conducted signals for data transmission.

4. An arrangement according to Claim 2,
**characterised in that**
a secondary winding arranged in the vehicle is provided as means for energy transmission, which winding can be inductively coupled to a primary winding which is encompassed by the locking part and is supplied via the flexible line.

5. An arrangement according to Claim 4,
**characterised in that**
an infeed device injects an alternating current into the primary winding, with a capacitor being connected to the secondary winding in series and/or in parallel such that the associated resonant frequency corresponds substantially to the frequency of the injected alternating current.

6. An arrangement according to at least one of the preceding claims,
**characterised in that**
the locking unit of the vehicle is arranged on a first side of a wheel of the vehicle and the locking part in the state connected to the locking unit penetrates at least partially through a cutout in a further unit, with the wheel being provided between this further unit and the locking unit.

7. An arrangement according to at least one of the preceding claims,
**characterised in that**
the flexible line has a steel wire mesh or hardened steel sleeves.

8. An arrangement according to Claim 7,
**characterised in that**
at least two electrical lines spaced apart from each other are provided within the steel wire mesh.

9. An arrangement according to at least one of the preceding claims,
**characterised in that**
the flexible line has a rotationally symmetrical and/or coaxial construction.

10. An arrangement according to at least one of the preceding claims,
**characterised in that**
the flexible line has a traction cable for strain relief.

11. An arrangement according to at least one of the preceding claims,
**characterised in that**
the locking unit and/or an energy store is/are embodied to be electrically heatable, in particular with control electronics being provided on the vehicle for this purpose.

12. An arrangement according to Claim 4,
**characterised in that**
the locking part and the locking unit are arranged on the vehicle, with the locking part encompassing the secondary winding.

13. An arrangement according to at least one of the preceding claims,
**characterised in that**
the locking part is arranged on the locking unit by means of a rotary joint,
in particular with the rotary joint having a lock for closing or opening.

14. An arrangement according to at least one of the preceding claims,
**characterised in that**
the stationarily arranged means is a rod which comprises electrical lines.

## Revendications

1. Ensemble permettant d'attacher un véhicule (21) à un moyen (20) disposé en un emplacement fixe,
sachant qu'une unité de verrouillage (30) est disposée sur le véhicule (21), unité qui peut être reliée par complémentarité de forme à un élément de verrouillage (31) qui est relié par l'intermédiaire d'une ligne flexible (9) au moyen (20) disposé en un emplacement fixe,
sachant que l'élément de verrouillage (31) comprend des moyens (43, 44) pour la transmission d'énergie, en particulier la transmission d'énergie électrique,
**caractérisé en ce que** l'élément de verrouillage (31) est utilisé comme dispositif d'immobilisation et/ou de blocage en rotation pour une roue,
sachant que l'élément de verrouillage (31) traverse la région des rayons d'une roue du véhicule (21).

2. Ensemble selon la revendication 1, **caractérisé en ce que** la ligne flexible comprend au moins une ligne électrique.

3. Ensemble selon la revendication 2, **caractérisé en ce qu'**on utilise comme moyens pour la transmission d'énergie des contacts électriques, sachant en particulier que l'élément de verrouillage présente à cet effet sur sa face extérieure des surfaces de contact électrique, avec lesquelles peuvent entrer en contact des moyens de mise en contact du véhicule qui sont disposés dans le véhicule.
sachant en particulier que le courant de charge pour un accumulateur d'énergie peut être apporté par l'intermédiaire de premiers moyens de mise en contact, en particulier au nombre de deux,
sachant en particulier que d'autres moyens de mise en contact sont prévus pour faire passer des signaux filaires destinés à la transmission de données.

4. Ensemble selon la revendication 2, **caractérisé en ce qu'**il est prévu comme moyens pour la transmission d'énergie un enroulement secondaire disposé dans le véhicule, qui peut être couplé par induction à un enroulement primaire qui est compris dans l'élément de verrouillage et qui est alimenté par l'intermédiaire de la ligne flexible.

5. Ensemble selon la revendication 4, **caractérisé en ce qu'**un appareil d'alimentation injecte un courant alternatif dans l'enroulement primaire, sachant qu'un condensateur est branché en série et/ou en parallèle avec l'enroulement secondaire de telle sorte que la fréquence de résonance associée correspond pour l'essentiel à la fréquence du courant alternatif injecté.

6. Ensemble selon au moins une des revendications précédentes, **caractérisé en ce que** l'unité de verrouillage du véhicule est disposé sur un premier côté d'une roue du véhicule, et l'élément de verrouillage, dans l'état relié à l'unité de verrouillage, traverse au moins partiellement un évidement d'une autre unité, sachant que la roue est prévue entre cette autre unité et l'unité de verrouillage.

7. Ensemble selon au moins une des revendications précédentes, **caractérisé en ce que** la ligne flexible présente une tresse de fil d'acier ou des manchons en acier trempé.

8. Ensemble selon la revendication 7, **caractérisé en ce qu'**au moins deux lignes électriques distantes l'une de l'autre sont prévues à l'intérieur de la tresse de fil d'acier.

9. Ensemble selon au moins une des revendications précédentes, **caractérisé en ce que** la ligne flexible possède une structure à symétrie de révolution et/ou coaxiale.

10. Ensemble selon au moins une des revendications précédentes, **caractérisé en ce que** la ligne flexible présente un câble de traction à des fins de soulagement.

11. Ensemble selon au moins une des revendications précédentes, **caractérisé en ce que** l'unité de verrouillage et/ou un accumulateur d'énergie est/sont réalisés avec possibilité de chauffage électrique,
sachant en particulier qu'une unité électronique de commande est prévue à cet effet sur le véhicule.

12. Ensemble selon la revendication 4, **caractérisé en ce que** l'élément de verrouillage et l'unité de verrouillage sont disposés sur le véhicule, sachant que l'élément de verrouillage comprend l'enroulement secondaire.

13. Ensemble selon au moins une des revendications précédentes, **caractérisé en ce que** l'élément de verrouillage est disposé sur l'unité de verrouillage au moyen d'une articulation tournante,
sachant en particulier que l'articulation tournante présente une serrure pour le verrouillage ou l'ouverture.

14. Ensemble selon au moins une des revendications précédentes, **caractérisé en ce que** le moyen disposé en un emplacement fixe est un poteau qui comprend des lignes électriques.
